# EUROPEAN PATENT SPECIFICATION

(11) **EP 2 843 219 B1**
(45) Date of publication and mention of the grant of the patent: **19.07.2017**
(21) Application number: 12875335.7
(22) Date of filing: 24.04.2012
(51) Int. Cl.: F02D 41/40, F02D 45/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 04.03.2015
(73) Proprietor: Toyota Jidosha Kabushiki Kaisha, Toyota-shi, Aichi 471-8571 (JP)
(72) Inventor: AOYAMA, Yukitoshi, Toyota-shi Aichi 471-8571 (JP)
(74) Representative: TBK
(86) International application number: PCT/JP2012/060985
(87) International publication number: WO 2013/161008

(56) References cited:
- WO-A1-02/38936
- DE-A1- 19 632 903
- JP-A- H0 626 387
- JP-A- H0 626 387
- JP-A- 2002 188 445
- JP-A- 2003 120 350
- JP-A- 2004 108 218
- JP-A- 2006 052 684
- JP-A- 2006 052 684
- JP-B2- 2 831 483
- JP-B2- 2 831 483
- US-A- 5 499 537
- US-A1- 2010 017 098

## Description

### Technical Field

The present invention relates to, for example, a control apparatus for an internal combustion engine having a plurality of cylinders.

### Background Art

On this type of control apparatus, various parameters of the internal combustion engine are controlled on the basis of the output value of a cylinder pressure sensor which detects the pressure of a combustion chamber of the internal combustion engine. For example, in Patent document 1, there is proposed a technology in which fuel injection timing is adjusted such that a combustion ratio obtained on the basis of the output value of the cylinder pressure sensor is a predetermined combustion ratio which realizes a target crank angle. In Patent document 2, there is also proposed a technology in which fuel sub injection is controlled by using a heat release or generation rate obtained on the basis of the output value of the cylinder pressure sensor.

On the other hand, there is also known a method of controlling the various parameters of the internal combustion engine, on the basis of a predetermined frequency component of the number of revolutions of the internal combustion engine. For example, in Patent document 3, there is proposed a technology in which an operating state of each of the plurality of cylinders is estimated on the basis of the predetermined frequency and in which the control parameter of the internal combustion engine is set according to the estimated operating state.

### Prior Art Documents

### Patent Documents

Patent document 1: Japanese Patent Application Laid Open No. 2010-1271715
Patent document 2: Japanese Patent Application Laid Open No. 2010-196581
Patent document 3: Japanese Patent Application Laid Open No. 2006-052684

### Summary of the Invention

### Subject to be Solved by the Invention

In the technologies associated with the Patent document 1 and the Patent document 2 described above, it is required to provide each of the plurality of cylinders with the cylinder pressure sensor if the internal combustion engine having the plurality of cylinders is controlled. Thus, as a whole, the internal combustion engine needs to be provided with the same number of cylinder pressure sensors as that of the cylinders, and that increases cost accordingly, which is technically problematic.

There is also considered a method in which only one cylinder is provided with the cylinder pressure sensor, and in which a correction value for the one cylinder (i.e. a value for controlling a combustion state) is applied to another cylinder. In this method, however, an exhaust gas recirculation (EGR) distribution factor among the cylinders, injector variation and deterioration, a cylinder temperature difference, a filling efficiency difference and the like cannot be considered. This causes fuel variation among the cylinders, and in the worst case, it also causes the cylinder having a worse combustion state, which is technically problematic.

In view of the aforementioned problems, it is therefore an object of the present invention to provide a control apparatus for an internal combustion engine, configured to preferably control the combustion state of each of the plurality of cylinders in the internal combustion engine on the basis of the detected cylinder pressure.

### Means for Solving the Subject

The above object of the present invention can be solved by a control apparatus for an internal combustion engine having a plurality of cylinders, said control apparatus provide with: a cylinder pressure detecting device configured to detect cylinder pressure of one cylinder out of the plurality of cylinders; a crank angular velocity detecting device configured to detect crank angular velocity of the internal combustion engine; a vibration intensity detecting device configured to detect vibration intensity of predetermined rotation order of the crank angular velocity; a first combustion controlling device configured to change a combustion parameter of the one cylinder on the basis of the cylinder pressure of the one cylinder; and a second combustion controlling device configured to change the combustion parameter of another cylinder out of the plurality of cylinders on the basis of the vibration intensity of the predetermined rotation order, after the change in the combustion parameter of the one cylinder.

The control apparatus for the internal combustion engine of the present invention is configured, for example, as a multi-cylinder diesel engine or the like mounted on a vehicle, and is configured to extract a force generated when an air-fuel mixture containing fuel is burned in a combustion chamber within the cylinder(s), as a driving force through a physical or mechanical transmitting device such as, for example, a piston, a connecting rod, and a crankshaft, as occasion demands.

The control apparatus for the internal combustion engine of the present invention is a control apparatus configured to control the internal combustion engine described above, and can adopt forms of various computer systems, such as various controllers or microcomputer apparatuses, and various processing units like a single or a plurality of electronic controlled units (ECUs), which can include, for example, one or a plurality of central processing units (CPUs), micro processing units (MPUs), various processors or various controllers, or various storing devices such as a read only memory (ROM), a random access memory (RAM), a buffer memory, or a flash memory, as occasion demands.

In operation of the control apparatus for the internal combustion engine of the present invention, the cylinder pressure of one cylinder out of the plurality of cylinders is detected by the cylinder pressure detecting device which includes, for example, a cylinder pressure sensor or the like. In other words, the cylinder pressure of another cylinder other than the one cylinder does not have to be detected.

Moreover, in operation of the control apparatus for the internal combustion engine of the present invention, the crank angular velocity (i.e. angular velocity of a crankshaft) of the internal combustion engine is detected by the crank angular velocity detecting device which includes, for example, a crank position sensor or the like.

If the crank angular velocity is detected, the vibration intensity of the predetermined rotation order of the crank angular velocity is detected by the vibration intensity detecting device. The "predetermined rotation order" herein is rotation order which allows a peak to occur when the combustion state varies among the plurality of cylinders. For example, there are listed half-order torsional vibration, first-order torsional vibration, second-order torsional vibration of the internal combustion engine. The predetermined rotation order may include a plurality of rotation orders. In other words, a plurality of vibration intensities corresponding to the plurality of rotation orders may be detected on the vibration intensity detecting device.

According to the control apparatus for the internal combustion engine of the present invention, combustion control of the plurality of cylinders is performed on the basis of the cylinder pressure of the one cylinder and the vibration intensity of the predetermined rotation order described above. The combustion control is performed by the first combustion controlling device and the second combustion controlling device explained below.

On the first combustion controlling device, the combustion parameter of the one cylinder is changed on the basis of the cylinder pressure of the one cylinder detected on the cylinder pressure detecting device. The "combustion parameter" herein means a parameter which can influence the combustion state of the cylinder. For example, there are listed fuel injection timing, an injection amount, a pilot injection amount, or a reflux volume in a EGR system, and the like. The first controlling device changes the combustion parameter to a value according to the cylinder pressure, thereby leading the combustion state of the one cylinder into an appropriate state.

On the second combustion controlling device, after the change in the combustion parameter of the one cylinder (i.e. after the control by the first combustion controlling device), the combustion parameter of another cylinder (i.e. the cylinder other than the one cylinder) is changed on the basis of the vibration intensity of the predetermined rotation order detected on the vibration intensity detecting device On the second combustion controlling device, the combustion parameter is changed, for example, to reduce the vibration intensity of the predetermined rotation order. By this, the combustion state of another cylinder is controlled to match that of the one cylinder which is led into the appropriate combustion state by the first combustion controlling device. Therefore, the combustion state of another cylinder is set to be appropriate, as in the one cylinder.

In the present invention, as described above, if the cylinder pressure of the one cylinder is detected, appropriate combustion control can be performed on all the cylinders even if the cylinder pressure of another cylinder is not detected. It is thus possible to prevent cost increase because each cylinder does not have to be provided with a member such as the cylinder pressure sensor.

Moreover, there is also considered a method of applying a correction value based on the cylinder pressure of the one cylinder (i.e. a value for controlling the combustion state) to another cylinder. In this method, however, an EGR distribution factor among the cylinders, injector variation and deterioration, a cylinder temperature difference, a filling efficiency difference and the like cannot be considered. This likely causes fuel variation among the cylinders, and in the worst case, it also likely causes the cylinder having a worse combustion state.

In the present invention, however, as described above, the combustion state is controlled on the basis of the cylinder pressure only in the one cylinder, and the combustion state is controlled on the basis of the vibration intensity of the predetermined rotation order in another cylinder. It is therefore possible to perform the control that does not depend on a difference in characteristics among the cylinders, and to set the combustion states of all the cylinders to be appropriate.

As explained above, according to the control apparatus for the internal combustion engine of the present invention, it is possible to preferably control the combustion state of each of the plurality of cylinders of the internal combustion engine.

In one aspect of the control apparatus for the internal combustion engine of the present invention, wherein the predetermined rotation order includes half-order torsional vibration of the internal combustion engine.

According to this aspect, the half-order torsional vibration of the internal combustion engine, which is an index of combustion instability, is used in the combustion control by the second combustion controlling device. It is thus possible to lead the combustion state of another cylinder into a stable direction, easily and certainly.

In an aspect in which the predetermined rotation order includes the half-order torsional vibration of the internal combustion engine described above, wherein said second combustion controlling device has a second cylinder controlling device to change the combustion parameter of a second cylinder having a stroke shifted by 360 degrees from that of the one cylinder, so as to minimize the half-order torsional vibration of the internal combustion engine.

In this case, after the change in the combustion parameter of the one cylinder (i.e. after the control by the first combustion controlling device), the combustion parameter of the second cylinder, which is another cylinder, is changed by the second cylinder controlling device of the second combustion controlling device. The second cylinder is a cylinder having a stroke shifted by 360 degrees from that of the one cylinder,

On the second cylinder controlling device, the combustion parameter of the second cylinder is changed to minimize the half-order torsional vibration of the internal combustion engine. Incidentally, the term "minimize" means a minimum value which can be realized by changing the combustion parameter, but may be a value including a margin to some extent, not a strict minimum value.

If the combustion parameter of the second cylinder is changed as described above, it is possible to set the combustion state of the second cylinder to be equivalent to the combustion state of the one cylinder which is led into the appropriate combustion state by the first combustion controlling device. Therefore, the appropriate combustion state is realized even in the second cylinder in which the cylinder pressure is not detected.

Moreover, since the second cylinder is the cylinder having the stroke shifted by 360 degrees from that of the one cylinder as described above, the half-order torsional vibration of the internal combustion engine decreases after the control, and the first-order torsional vibration increases. If the first-order torsional vibration increases as described above, the combustion control based on the first-order torsional vibration of the internal combustion engine can be performed on another cylinder other than the second cylinder. Thus, by performing the combustion control of the second cylinder after the one cylinder, the combustion control can be performed on the remaining other cylinders.

In an aspect in which the second cylinder controlling device described above is provided, wherein the plurality of cylinders include a third cylinder and a fourth cylinder having strokes shifted by different angles from that of the another cylinder, in addition to the second cylinder, and said combustion controlling device has: (i) a third cylinder controlling device configured to change the combustion parameter of the third cylinder to minimize the half-order torsional vibration of the internal combustion engine, after the change in the combustion parameter of the second cylinder; and (ii) a fourth cylinder controlling device configured to change the combustion parameters of the third cylinder and the fourth cylinder to minimize first-order torsional vibration of the internal combustion engine, after the change in the combustion parameter of the third cylinder.

In this case, after the change in the combustion parameter of the second cylinder (i.e. after the control by the second cylinder controlling device), the combustion parameter of the third cylinder, which is another cylinder, is changed by the third cylinder controlling device of the second combustion controlling device. The third cylinder is a cylinder having a different angle of stroke with respect to the one cylinder, from that of the second cylinder. On the third cylinder controlling device, the combustion parameter of the third cylinder is changed to minimize the half-order torsional vibration of the internal combustion engine (i.e. while the half-order torsional vibration of the internal combustion engine decreases after the control, the first-order torsional vibration of the internal combustion engine increases). Incidentally, as in the aforementioned aspect, the term "minimize" means a minimum value which can be realized by changing the combustion parameter, but may be a value including a margin to some extent, not a strict minimum value.

Then, after the change in the combustion parameter of the third cylinder (i.e. after the control by the third cylinder controlling device), the combustion parameters of the third cylinder and the fourth cylinder, which are other cylinders, are changed by the fourth cylinder controlling device of the second combustion controlling device. The fourth cylinder is a cylinder having a different angle of stroke with respect to the one cylinder, from those of the second cylinder and the third cylinder. On the fourth cylinder controlling device, the combustion parameters of the third cylinder and the fourth cylinder are changed to minimize the first-order torsional vibration of the internal combustion engine. The control based on the first-order torsional vibration of the internal combustion engine as described above can be realized because the control for the cylinder in which the first-order torsional vibration of the internal combustion engine increases is performed by the second cylinder controlling device and the third cylinder controlling device.

If the combustion parameters of the third cylinder and the fourth cylinder are changed as described above, it is possible to set the combustion states of the third cylinder and the fourth cylinder to be equivalent to the combustion state of the one cylinder which is led into the appropriate combustion state by the first combustion controlling device. Therefore, the appropriate combustion state is realized even in the third cylinder and the fourth cylinder in which the cylinder pressure is not detected.

In another aspect of the control apparatus for the internal combustion engine of the present invention, said control apparatus provide with: a misfire determining device configured to determine a misfire of the internal combustion engine; a third combustion controlling device configured to uniformly change the combustion parameters of all the plurality of cylinders to reduce the vibration intensity of the predetermined rotation order before the control by the first combustion controlling device, if it is determined that there is the misfire.

According to this aspect, before the combustion control by the first combustion controlling device and the second combustion controlling device, it is determined by the misfire determining device whether or not there is the misfire in the internal combustion engine. The misfire determining device may use any determination method. For example, the misfire determining device can determine the misfire by using the half-order torsional vibration of the internal combustion engine detected by the vibration detecting device.

If it is determined that there is the misfire in the internal combustion engine, the combustion parameters of all the plurality of cylinders are uniformly changed by the third combustion controlling device. On the third combustion controlling device, the combustion parameters of all the cylinders are changed to reduce the vibration intensity of the predetermined rotation order. The combustion control by the third combustion controlling device is performed before the combustion control by the first combustion controlling device and the second combustion controlling device.

Here, if there is the misfire in the internal combustion engine, a variation among the cylinders becomes larger than usual. For example, the half-order torsional vibration of the internal combustion engine also has an extremely large value. If the half-order torsional vibration of the internal combustion engine has a too much value, it is likely hard to perform the combustion control by the second combustion controlling device in which relatively high accuracy is desired.

In this aspect, however, the value of the vibration intensity of the predetermined rotation order is reduced in advance by the third combustion controlling device. It is thus possible to preferably perform the combustion control by the first combustion controlling device and the second combustion controlling device even if there is the misfire in the internal combustion engine.

In another aspect of the control apparatus for the internal combustion engine of the present invention, wherein the combustion parameter includes at least one of fuel injection timing, an injection amount, a pilot injection amount, and an exhaust reflux volume of the internal combustion engine.

According to this aspect, it is possible to certainly bring the combustion state of each cylinder close to the appropriate state, by changing the combustion parameter. Moreover, if a plurality of parameters are changed from among the parameters described above, the combustion control can be performed, more efficiently. The combustion parameter may include a parameter other than the parameters listed herein.

The operation and other advantages of the present invention will become more apparent from an embodiment explained below.

### Brief Description of Drawings

[FIG. 1] FIG. 1 is a schematic configuration diagram conceptually illustrating a configuration of an engine system.
[FIG. 2] FIG. 2 is a schematic configuration diagram illustrating a configuration of cylinders in an engine.
[FIG. 3] FIG. 3 is a block diagram illustrating a configuration of an ECU.
[FIG. 4] FIG. 4 is a flowchart illustrating the operation of a control apparatus for an internal combustion engine in an embodiment.
[FIG. 5] FIGs. 5 are conceptual diagrams illustrating combustion control by a third combustion control unit.
[FIG. 6] FIGs. 6 are conceptual diagrams illustrating combustion control by a first combustion control unit.
[FIG. 7] FIGs. 7 are conceptual diagrams illustrating combustion control by a first control unit in a second combustion control unit.
[FIG. 8] FIGs. 8 are conceptual diagrams (ver. 1) illustrating combustion control in a comparative example.
[FIG. 9] FIGs. 9 are conceptual diagrams (ver. 2) illustrating combustion control in a comparative example.
[FIG. 10] FIGs. 10 are conceptual diagrams illustrating combustion control by a second control unit in the second combustion control unit.
[FIG. 11] FIGs. 11 are conceptual diagrams illustrating combustion control by a second control unit in the third combustion control unit.

### Mode for Carrying Out the Invention

Hereinafter, an embodiment of the present invention will be explained with reference to the drawings.

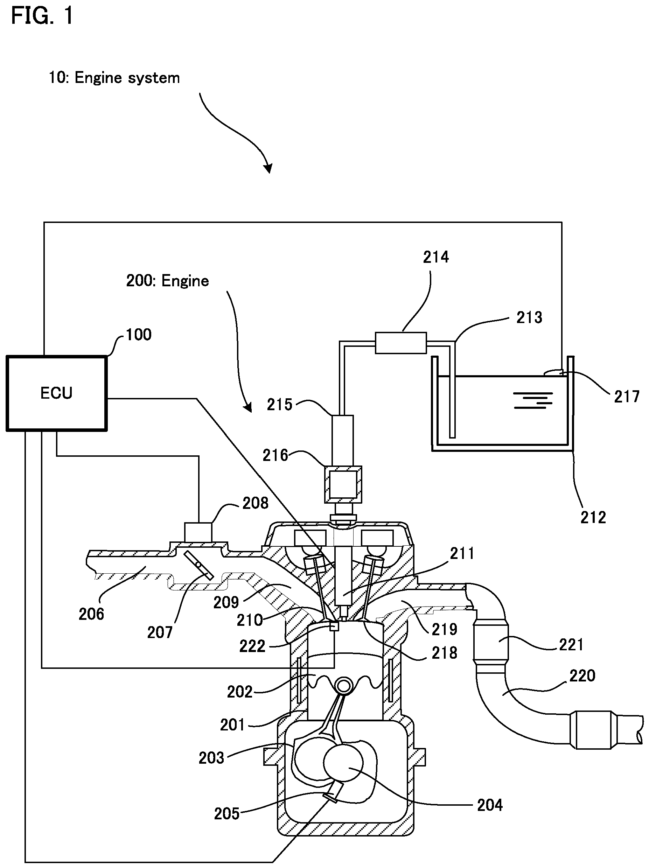

Firstly, a configuration of an engine system in the embodiment will be explained with reference to FIG. 1. FIG. 1 is a schematic configuration diagram conceptually illustrating the configuration of the engine system.

In FIG. 1, an engine system 10 is mounted on a not-illustrated vehicle, and is provided with an ECU 100 and an engine 200.

The ECU 100 is provided with a CPU, a ROM, a RAM or the like, and is an electronic control unit configured to control the entire operation of the engine 200. The ECU 100 is one example of the "control apparatus for the internal combustion engine" of the present invention. The ECU 100 is configured to perform various controls in accordance with a control program stored in, for example, the ROM or the like. The specific configuration of the ECU 100 will be detailed later.

The engine 200 is a diesel engine using light oil as fuel, and is one example of the "internal combustion engine" of the present invention. The engine 200 is configured to convert a reciprocating motion of a piston 202 into a rotational motion of a crankshaft 204 via a connecting rod 203, wherein the reciprocating motion of the piston 202 accords to explosive force generated when an air-fuel mixture containing the fuel is compressed and self-ignites in a cylinder 201.

In the vicinity of the crankshaft 204, there is disposed a crank position sensor 205 configured to detect a rotational position of the crankshaft 204. The crank position sensor 205 is electrically connected to the ECU 100, and is configured to calculate the number of engine revolutions NE of the engine 200 on the basis of the rotational position of the crankshaft 204 detected by the crank position sensor 205. The ECU 100 in the embodiment is configured to perform combustion control of the engine 200, by using vibration intensity detected on the basis of angular velocity of the crankshaft 204, as detailed later.

Hereinafter, a configuration of a principle part of the engine 200 will be explained with one portion of the operation thereof.

Upon combustion of the fuel in the cylinder 201, an air sucked from the exterior (or intake air) is purified by a not-illustrated cleaner, then passes through an intake tube 206, and is sucked into the cylinder 201 at the time of valve opening of an intake valve 210 through an intake port 209. At this time, an intake air amount associated with the intake air sucked into the cylinder 201 is detected by a not-illustrated airflow meter, and is outputted to the ECU 100 in regular or irregular output timing as an electrical signal

In the intake tube 206, there is disposed a throttle valve 207 configured to adjust the intake air amount. The throttle valve 207 is configured to be electrically or mechanically driven, for example, according to a manipulated variable of a not-illustrated accelerator pedal or the like, by a throttle valve motor 208 electrically connected to the ECU 100. A throttle opening degree which indicates the opening/closing state of the throttle valve 207 is detected by a not-illustrated throttle position sensor electrically connected to the ECU 100, and is outputted to the ECU 100 in regular or irregular timing.

The fuel of the engine 200 is stored in a fuel tank 212. In the fuel tank 212, there is disposed a float-type fuel amount sensor 217 configured to detect a remaining fuel amount which indicates the amount of the fuel stored in the fuel tank 212. The fuel amount sensor 217 is electrically connected to the ECU 100, and the detected fuel amount is known by the ECU 100 in regular or irregular timing.

On the other hand, the fuel stored in the fuel tank 212 is directly injected to a combustion chamber in the cylinder 201 by an injector 211. In the injection of the fuel via the injector 211, firstly, the fuel stored in the fuel tank 212 is pumped from the fuel tank 212 via a delivery pipe 213 by the action of a feed pump 214, and is supplied to a high pressure pump 215.

A common rail 216 is a high pressure storing device electrically connected to the ECU 100 and configured to store high pressure fuel supplied from an upstream side (i.e. a high pressure pump 215 side) up to a target rail pressure set by the ECU 100. In the common rail 216, there are disposed a rail pressure sensor configured to detect rail pressure, and a pressure limiter or the like configured to limit the amount of the fuel stored such that the rail pressure does not exceed an upper limit, but the illustration thereof is omitted there.

The aforementioned injector 211 of the engine 200 is mounted on each cylinder, and each injector 211 is connected to the common rail 216 via a high pressure delivery. Here, the configuration of the injector 211 is additionally explained. The injector 211 is provided with an electromagnetic valve configured to operate on the basis of a command of the ECU 100, and a nozzle configured to inject the fuel during current conduction to the electromagnetic valve (both of which are not illustrated). The electromagnetic valve is configured to control a communication state between a pressure chamber to which the high pressure fuel of the common rail 216 is applied and a low pressure passage on a low pressure side connected to the pressure chamber. The electromagnetic valve makes the pressurizing chamber communicate with the low pressure passage during the current conduction, and blocks the pressurizing chamber, and cuts off both the pressurizing chamber and the low pressure passage when the current conduction is stopped.

On the other hand, the nozzle has a built-in needle which opens and closes an injection hole, and fuel pressure of the pressure chamber energizes the needle in a valve opening direction (or a direction of closing the injection hole). Therefore, if the pressurizing chamber communicates with the low pressure passage due to the current conduction to the electromagnetic valve and the fuel pressure of the pressure chamber decreases, the needle rises in the nozzle to open the valve (or to open the injection hole), by which the high pressure fuel supplied by the common rail 216 can be injected from the injection hole. Moreover, if both the pressurizing chamber and the low pressure passage are cut off due to the stop of the current conduction to the electromagnetic valve and the fuel pressure of the pressure chamber thus increases, the needle falls down in the nozzle to close the valve, by which the injection is ended.

The fuel injected in the cylinder 201 as described above is mixed with the intake air sucked through the intake valve 210 to make the aforementioned air-fuel mixture. The air-fuel mixture self-ignites and is burned in a compression stroke, and is supplied to an exhaust tube 220 via an exhaust port 219 at the time of valve opening of an exhaust valve 218 which opens / closes in conjunction with the opening / closing of the intake valve 210, as a burned gas or a partially unburned air-fuel mixture.

Moreover, in the exhaust tube 220, there is disposed a diesel particulate filter (DPF) 221. The DPF 221 is configured to collect and purify soot or smoke, and particulate matters (PM) emitted from the engine 200.

Moreover, in a head portion of the cylinder 201, there is provided with a cylinder pressure sensor 222 configured to detect cylinder pressure which is internal pressure of the cylinder 201. The cylinder pressure sensor 222 is configured to output a detected value of the cylinder pressure.

Incidentally, the illustration is omitted to prevent a complicated explanation, but the engine 200 is provided with various sensors other than the aforementioned sensors. For example, a water temperature sensor configured to detect coolant temperature of the engine, a knock sensor configured to detect knocking level of the engine 200, an intake air temperature sensor configured to detect intake air temperature which is the temperature of the intake air, and an intake pressure sensor configured to detect intake pressure which is the pressure of the intake air, and the like are disposed in optimal positions for respective detection targets.

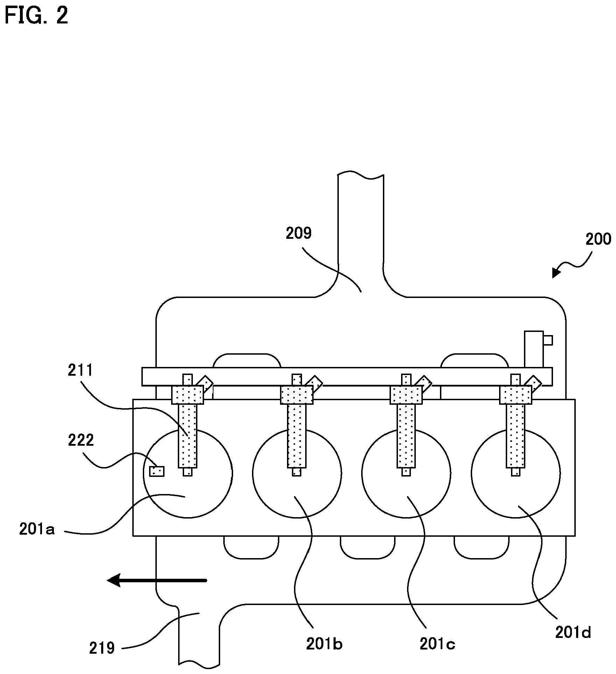

Next, a configuration of the cylinder 201 in the engine 200 described above will be specifically explained with reference to FIG. 2. FIG. 2 is a schematic configuration diagram illustrating the configuration of cylinders in the engine. In FIG. 2, for convenience of explanation, the illustration of the members of the engine 200 illustrated in FIG. 1 is omitted as occasion demands.

In FIG. 2, the engine 200 in the embodiment is an in-line four diesel engine provided with four cylinders 201. Each of the cylinders of the engine 200 is referred to as a first cylinder 201a, a second cylinder 201b, a third cylinder 201c, and a fourth cylinder 201d, in order from the left side of the drawing.

The first cylinder 201a is one example of the "one cylinder" of the present invention, and is provided with the cylinder pressure sensor 222. On the other hand, the second cylinder 201b, the third cylinder 201c and the fourth cylinder 201d are one example of the "another cylinder" of the present invention, and is not provided with the cylinder pressure sensor 222.

The first cylinder 201a, the second cylinder 201b, the third cylinder 201c and the fourth cylinder 201d are driven to have strokes shifted by a predetermined angle from each other, in operation thereof.

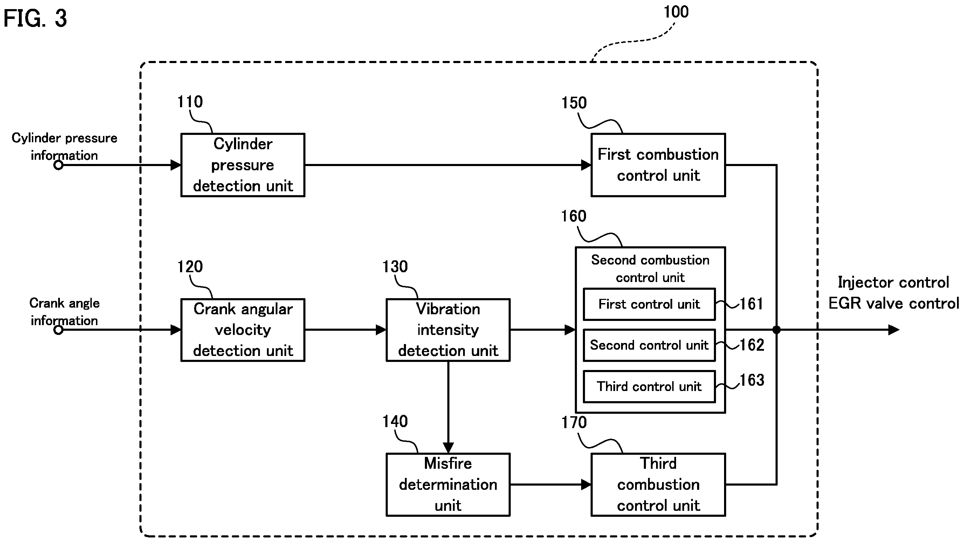

Next, a specific configuration of the ECU 100 which is the control apparatus for the internal combustion engine in the embodiment will be explained with reference to FIG. 3. FIG. 3 is a block diagram illustrating the configuration of the ECU.

In FIG. 3, the ECU 100 is provided with a cylinder pressure detection unit 110, a crank angular velocity detection unit 120, a vibration intensity detection unit 130, a misfire determination unit 140, a first combustion control unit 150, a second combustion control unit 160, and a third combustion control unit 170.

The cylinder pressure detection unit 110 is one example of the "cylinder pressure detecting device" of the present invention, and detects the cylinder pressure of the first cylinder 201a on the basis of a signal outputted from the cylinder pressure sensor 222. The cylinder pressure detection unit 110 is configured to output the detected cylinder pressure to the first combustion control unit 150.

The crank angular velocity detection unit 120 is one example of the "crank angular velocity detecting device" of the present invention, and detects the angular velocity of the crankshaft 204 on the basis of a crank angle signal outputted from the crank position sensor 205 (refer to FIG. 1). The crank angular velocity detection unit 120 is configured to output the detected crank angular velocity to the vibration intensity detection unit 130.

The vibration intensity detection unit 130 is one example of the "vibration intensity detecting device" of the present invention, and detects vibration intensity of predetermined rotation order from the crank angular velocity detected on the crank angular velocity detection unit 120. The vibration intensity detection unit 130 is configured to output the detected vibration intensity to each of the misfire determination unit 140 and the second combustion control unit 160.

The misfire determination unit 140 determines the occurrence of a misfire in the engine 200 on the basis of the vibration intensity detected on the vibration intensity detection unit 130. The misfire determination unit 140 determines, for example, whether or not the vibration intensity exceeds a predetermined threshold value, thereby determining the occurrence of the misfire in the engine 200. The misfire determination unit 140 is configured to output a determination result to the third combustion control unit 170.

The first combustion control unit 150 is one example of the "first combustion controlling device" of the present invention, and controls the combustion state of the first cylinder 201a on the basis of the cylinder pressure detected on the cylinder pressure detection unit 110. The control of the combustion state is realized, for example, by changing injection timing, an injection amount, a pilot injection amount of the injector 211, or a reflux volume in a not-illustrated EGR system. The same combustion control method as described above shall apply in the second combustion control unit 160 and the third combustion control unit 170 described later.

The second combustion control unit 160 is one example of the "second combustion controlling device" of the present invention, and controls the combustion state of each of the second cylinder 201b, the third cylinder 201c and the fourth cylinder 201d on the basis of the vibration intensity detected on the vibration intensity detection unit 130.

The second combustion control unit 160 is provided with a first control unit 161, a second control unit 162 and a third control unit 163. The first control unit 161 is one example of the "second cylinder controlling unit" of the present invention, and controls the combustion state of the second cylinder 201b. The second control unit 162 is one example of the "third cylinder controlling unit" of the present invention, and controls the combustion state of the third cylinder 201c. The third control unit 163 is one example of the "fourth cylinder controlling unit" of the present invention, and controls the combustion state of the third cylinder 201c and the fourth cylinder 201d.

The third combustion control unit 170 is one example of the "third combustion controlling device" of the present invention, and controls the combustion states of all of the first cylinder 201a, the second cylinder 201b, the third cylinder 201c and the fourth cylinder 201d, by a predetermined amount set in advance, if it is determined on the misfire determination unit 140 that there is the misfire.

The ECU 100 including every parts described above is an integrally configured electronic control unit, and all the operations associated with the every parts are performed by the ECU 100. The physical, mechanical, and electrical configurations of the aforementioned parts of the present invention, however, are not limited to this example, and each of the parts may be configured as various computer systems such as a plurality of ECUs, various processing units, various controllers, or microcomputer apparatuses.

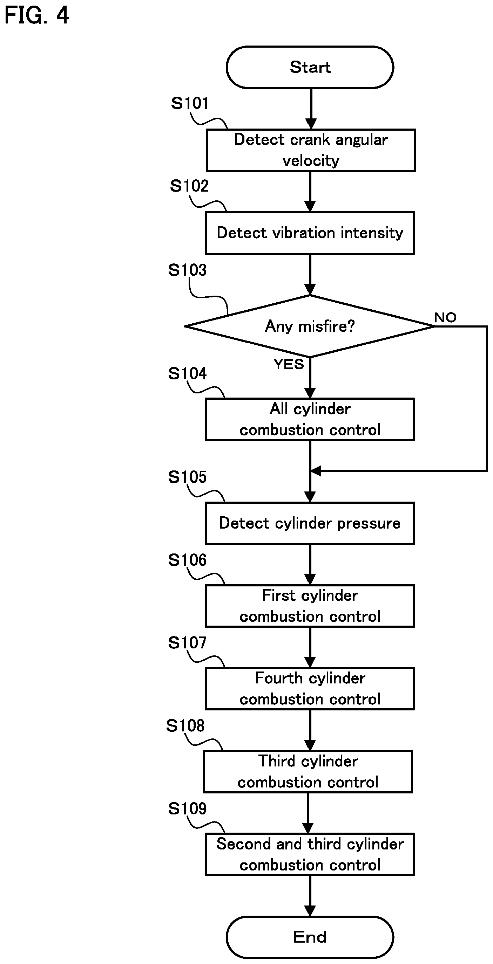

Next, the operation of the control apparatus for the internal combustion engine in the embodiment will be explained with reference to FIG. 4. FIG. 4 is a flowchart illustrating the operation of the control apparatus for the internal combustion engine in the embodiment.

In FIG. 4, in operation of the control apparatus for the internal combustion engine in the embodiment, firstly, the crank angular velocity of the engine 200 is detected on the crank angular velocity detection unit 120 (step S101). If the crank angular velocity is detected, the vibration intensity of a predetermined frequency component of the crank angular velocity (or specifically, a half-order torsional vibration component of the engine 200) is detected on the vibration intensity detection unit 130 (step S102).

If the vibration intensity is detected, it is determined on the misfire determination unit 140 whether or not there is the misfire in the engine 200 (step S103). The misfire determination unit 140 determines the misfire from whether or not the half-order torsional vibration component of the engine 200, which is an index of combustion instability, exceeds the predetermined threshold value. The determination of the misfire may be also performed in another method.

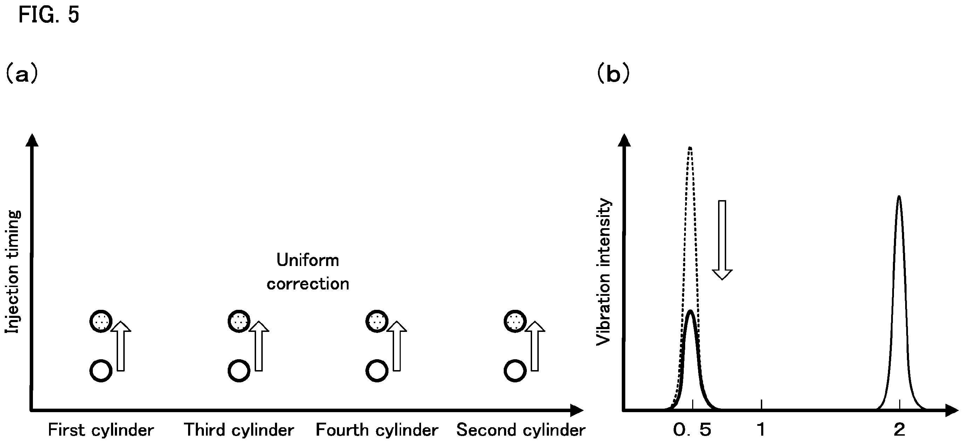

If it is determined that there is the misfire (the step S103: YES), the combustion states of all the cylinders that are the first cylinder 201a, the second cylinder 201b, the third cylinder 201c and the fourth cylinder 201d are controlled by the third combustion control unit 170 (step S104). Hereinafter, the combustion control by the third combustion control unit 170 will be specifically explained with reference to FIGs. 5. FIGs. 5 are conceptual diagrams illustrating the combustion control by the third combustion control unit.

In FIGs. 5, the third combustion control unit 170 uniformly corrects (or changes) a combustion parameter (or here, fuel injection timing) in all the cylinders that are the first cylinder 201a, the second cylinder 201b, the third cylinder 201c and the fourth cylinder 201d. This reduces the half-order torsional vibration of the engine 200 which is an extremely large value due to the occurrence of the misfire. As described above, it is possible to preferably perform control by the second combustion control unit 160 described later (i.e. control in which fine adjustment is required for the half-order torsional vibration of the engine 200) by reducing the half-order torsional vibration of the engine 200.

If there is no misfire, it is considered that the half-order torsional vibration of the engine 200 has a relatively small value, and it is thus possible to preferably perform the control by the second combustion control unit 160 without change. Therefore, if it is determined that there is not misfire (the step S103: NO), the process in the step S104 is omitted.

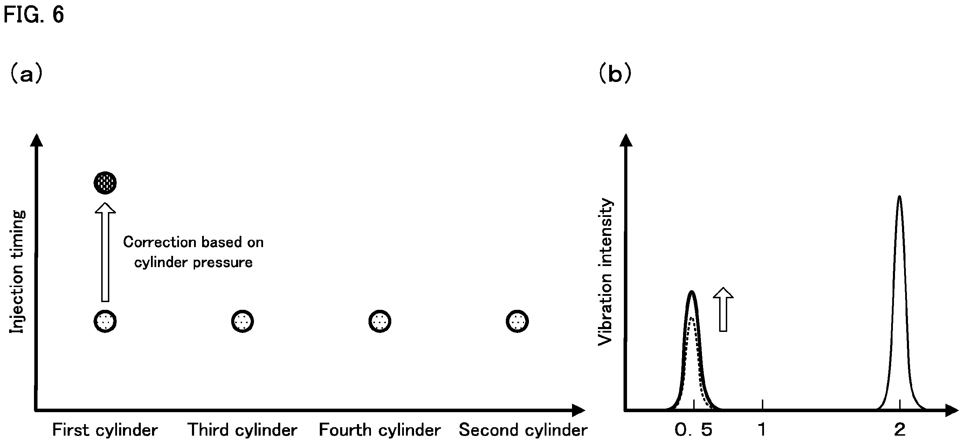

Back in FIG. 4, the cylinder pressure of the first cylinder 201a is then detected on the cylinder pressure detection unit 110 (step S105). If the cylinder pressure of the first cylinder 201a is detected, the combustion state of the first cylinder 201a is controlled by the first combustion control unit 150 (step S106). Hereinafter, the combustion control by the first combustion control unit 150 will be specifically explained with reference to FIGs. 6. FIGs. 6 are conceptual diagrams illustrating the combustion control by the first combustion control unit.

In FIG. 6, the first combustion control unit 150 corrects the fuel injection timing of the first cylinder 201a on the basis of the cylinder pressure of the first cylinder 201a. This leads the combustion state of the first cylinder 201a into a more appropriate state. The control of the combustion state of the first cylinder 201a increases a difference in the combustion state from the other cylinders (i.e. the second cylinder 201b, the third cylinder 201c and the fourth cylinder 201d). Thus, the half-order torsional vibration of the engine 200 corresponding to a variation in the combustion state increases to some extent.

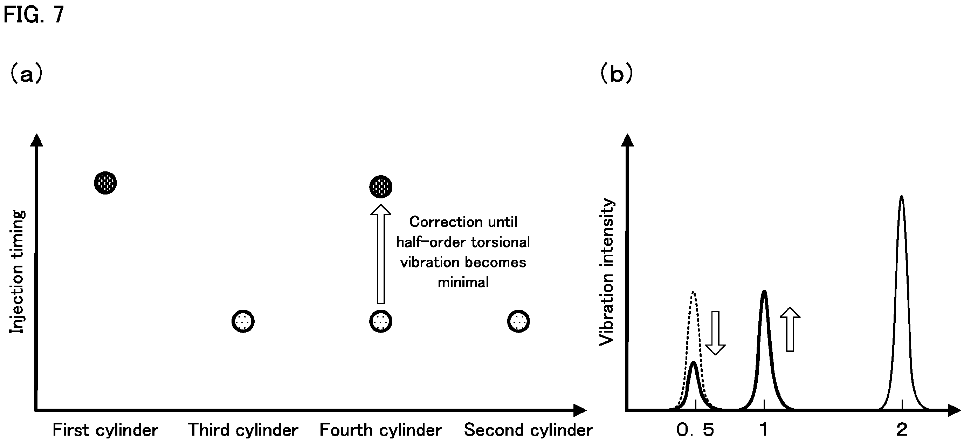

Back in FIG. 4, after the combustion control of the first cylinder 201a, the combustion state of the fourth cylinder 201d is controlled by the first control unit 161 of the second combustion control unit 160 (step S107). Hereinafter, the combustion control by the first control unit 161 will be specifically explained with reference to FIGs. 7. FIGs. 7 are conceptual diagrams illustrating the combustion control by the first control unit in the second combustion control unit.

In FIGs. 7, the first control unit 161 corrects the fuel injection timing of the fourth cylinder 201d to minimize the half-order torsional vibration of the engine 200. In order to perform the control as described above, during the combustion control by the first control unit 161, the crank angular velocity is detected and the half-order torsional vibration of the engine 200 is detected, as in the step S101 and the step S102 described above.

If the correction for reducing the half-order torsional vibration of the engine 200 (i.e. correction for reducing the variation in the combustion state) is performed, the combustion state of the fourth cylinder 201d approaches the combustion state of the first cylinder 201a. Thus, the combustion state of the fourth cylinder 201d is equivalent to the combustion state of the first cylinder 201a which is led into the appropriate state by the first combustion control unit 150. In other words, the combustion state of the fourth cylinder 201d becomes in a more appropriate state.

In Particular, the fourth cylinder 201d is a cylinder having a stroke shifted by 360 degrees from that of the first cylinder 201a. Thus, if the combustion state of the fourth cylinder 201d is controlled by the first control unit 161, the half-order torsional vibration of the engine 200 decreases, but, conversely, first-order torsional vibration of the engine 200 increases. As described above, by performing the correction that causes the first-order torsional vibration of the engine 200 instead of the half-order torsional vibration of the engine 200, the subsequent combustion control (i.e. the combustion control based on the first-order torsional vibration of the engine 200) can be preferably performed.

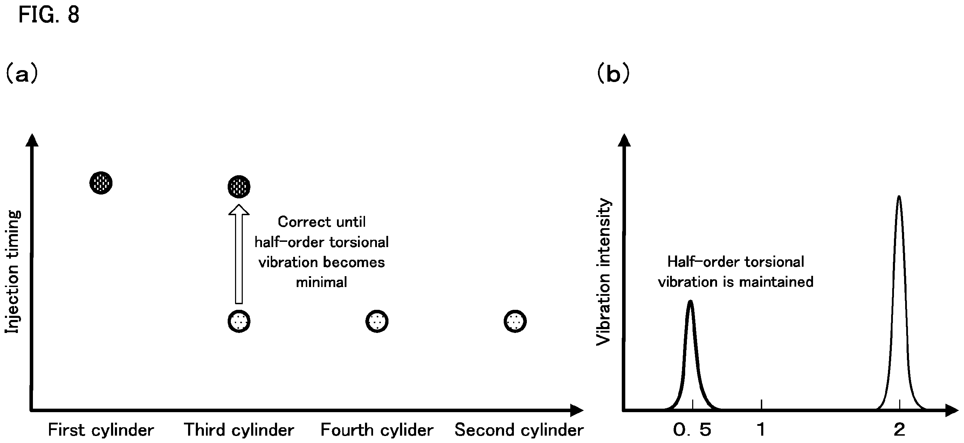

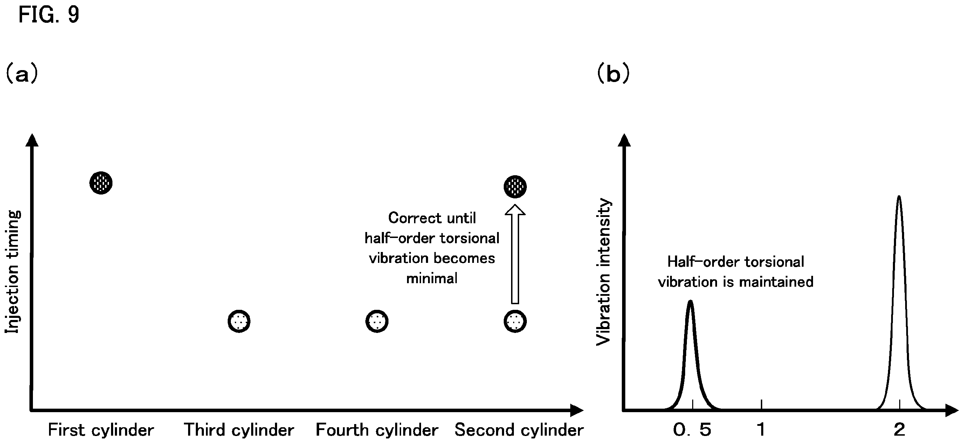

Hereinafter, comparative examples in which the first-order torsional vibration of the engine 200 does not occur will be explained with reference to FIGs. 8 and FIGs. 9. FIGs. 8 are conceptual diagrams (ver. 1) illustrating the combustion control in the comparative example. FIGs. 9 are conceptual diagrams (ver. 2) illustrating the combustion control in the comparative example.

In the comparative example illustrated in FIGs. 8, the combustion control of the third cylinder 201c is performed after the combustion control of the first cylinder 201a. Here, the third cylinder 201c is not a cylinder having a stroke shifted by 360 degrees from that of the first cylinder 201a, unlike the fourth cylinder 201d. In this case, even if the same control as that in the embodiment described above is performed, the vibration intensity does not change, because the half-order torsional vibration of the engine 200 increases due to a large difference between the third cylinder 201c and the other second cylinder 201b and fourth cylinder 201d to the extent that the half-order torsional vibration of the engine 200 is reduced due to a small difference in the combustion state between the first cylinder 201a and the third cylinder 201c. Moreover, the first-order torsional vibration of the engine 200 does not occur. Therefore, in the comparative example illustrated in FIGs. 8, the combustion control based on the first-order torsional vibration of the engine 200 cannot be performed after the combustion control of the third cylinder 201c.

In the comparative example illustrated in FIGs. 9, the combustion control of the second cylinder 201b is performed after the combustion control of the first cylinder 201a. Here, the second cylinder 201b is not a cylinder having a stroke shifted by 360 degrees from that of the first cylinder 201a, unlike the fourth cylinder 201d. Thus, even if the same control as that in the embodiment described above is performed, the vibration intensity does not change, because the half-order torsional vibration of the engine 200 increases due to a large difference between the second cylinder 201b and the other third cylinder 201c and fourth cylinder 201d to the extent that the half-order torsional vibration of the engine 200 is reduced due to a small difference in the combustion state between the first cylinder 201a and the second cylinder 201b. Moreover, the first-order torsional vibration of the engine 200 does not occur. Therefore, in the comparative example illustrated in FIGs. 9, the combustion control based on the first-order torsional vibration of the engine 200 cannot be performed after the combustion control of the third cylinder 201c.

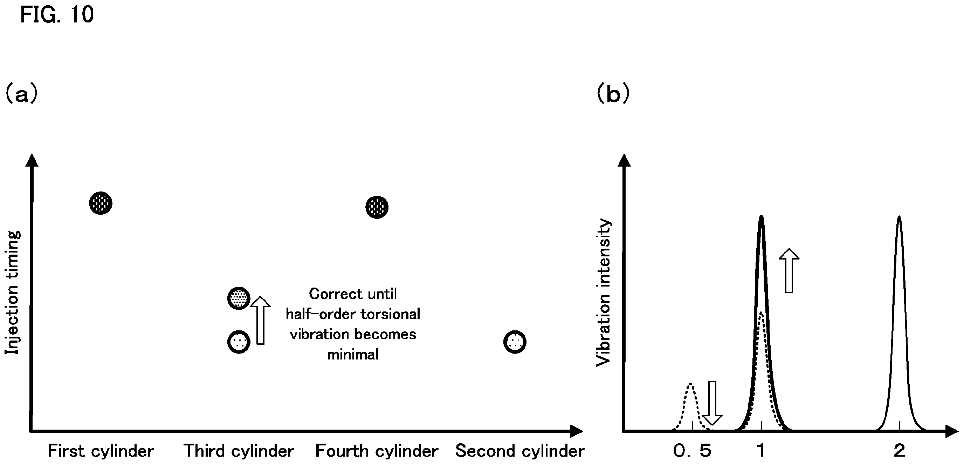

Back in FIG. 4, after the combustion control of the fourth cylinder 201d, the combustion state of the third cylinder 201c is controlled by the second control unit of the second combustion control unit 160 (step S108). Hereinafter, the combustion control by the second control unit 162 will be specifically explained with reference to FIGs. 10. FIGs. 10 are conceptual diagrams illustrating the combustion control by the second control unit in the second combustion control unit.

In FIGs. 10, the second control unit 162 corrects the fuel injection timing of the third cylinder 201c to minimize the half-order torsional vibration of the engine 200. In order to perform the control as described above, during the combustion control by the second control unit 162, the crank angular velocity is detected and the half-order torsional vibration of the engine 200 is detected, as in the step S101 and the step S102 described above.

If the correction for reducing the half-order torsional vibration of the engine 200 is performed, the combustion state of the third cylinder 201c approaches the combustion state of the first cylinder 201a. The combustion state of the third cylinder 201c after the control here, however, is not set in an optimal combustion state, as opposed to the case of the control of the fourth cylinder 201d. The combustion state of the third cylinder 201c is led into the optimal state, together with the second cylinder 201b, by the combustion control by the third control unit 163 described later.

If the combustion state of the third cylinder 201c is controlled by the second control unit 162, the half-order torsion vibration of the engine 200 becomes almost zero, but conversely, the first-order torsion vibration of the engine 200 increases.

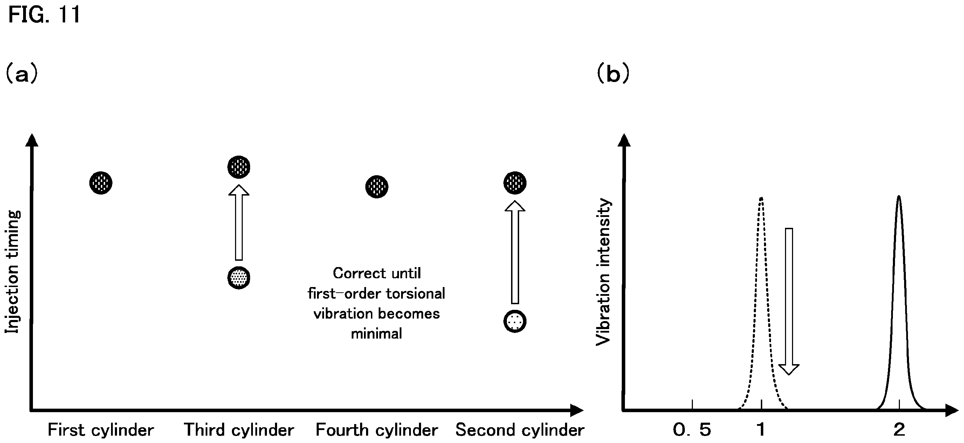

Back in FIG. 4, after the combustion control of the third cylinder 201c, the combustion state of the third cylinder 201c and the fourth cylinder 201d is controlled by the third control unit 163 of the second combustion control unit 160 (step S109). Hereinafter, the combustion control by the third control unit 163 will be specifically explained with reference to FIGs. 11. FIGs. 11 are conceptual diagrams illustrating the combustion control by the third control unit in the second combustion control unit.

In FIGs. 11, the third control unit 163 corrects the fuel injection timing of the third cylinder 201c and the fourth cylinder 201d to minimize the first-order torsional vibration of the engine 200. Both the fuel injection timing of the third cylinder 201c and the fuel injection timing of the fourth cylinder 201d are corrected by the same amount. Moreover, in order to perform the control as described above, during the combustion control by the first control unit 161, the crank angular velocity is detected and the first-order torsional vibration of the engine 200 is detected, as in the step S101 and the step S102 described above.

If the correction for reducing the first-order torsional vibration of the engine 200 is performed, the combustion states of the third cylinder 201c and the fourth cylinder 201d approach the combustion state of the first cylinder 201a. Thus, the combustion states of the third cylinder 201c and the fourth cylinder 201d are equivalent to the combustion state of the first cylinder 201a which is led into the appropriate state by the first combustion control unit 150. In other words, the combustion states of third cylinder 201c and the fourth cylinder 201d also become in a more appropriate state.

As described above, according to the control apparatus for the internal combustion engine in the embodiment, the combustion state is controlled on the basis of the cylinder pressure only in the first cylinder 201a, and the combustion state is controlled on the basis of the half-order torsional vibration or the first-order torsional vibration of the engine 200 in the other cylinders. Therefore, if the cylinder pressure of the first cylinder 201a is detected, it is possible to perform the appropriate combustion control on all the cylinders even if the cylinder pressure of the other cylinders which are the second cylinder 201b, the third cylinder 201c and the fourth cylinder 201d is not detected. It is thus possible to prevent cost increase because a member such as the cylinder pressure sensor does not have to be provided.

As explained above, according to the control apparatus for the internal combustion engine in the embodiment, it is possible to preferably control the combustion state of each of the plurality of cylinders 201 of the engine 200.

The present invention is not limited to the aforementioned embodiment, but various changes may be made, if desired, without departing from the essence or spirit of the invention which can be read from the claims and the entire specification. A control apparatus for an internal combustion engine, which involves such changes, is also intended to be within the technical scope of the present invention.

### Description of Reference Numerals

- 10: ECU
- 110: cylinder pressure detection unit
- 120: crank angular velocity detection unit
- 130: vibration intensity detection unit
- 140: misfire determination unit
- 150: first combustion control unit
- 160: second combustion control unit
- 161: first control unit
- 162: second control unit
- 163: third control unit
- 170: third combustion control unit
- 200: engine
- 201: cylinder
- 201a: first cylinder
- 201b: second cylinder
- 201c: third cylinder
- 201d: fourth cylinder
- 204: crankshaft
- 205: crank position sensor
- 207: throttle valve
- 209: intake port
- 211: injector
- 212: fuel tank
- 219: exhaust port
- 222: cylinder pressure sensor

## Claims

1. (Amended) A control apparatus for an internal combustion engine having a plurality of cylinders, said control apparatus comprising:
a cylinder pressure detecting device configured to detect cylinder pressure of one cylinder out of the plurality of cylinders;
a crank angular velocity detecting device configured to detect crank angular velocity of the internal combustion engine;
a vibration intensity detecting device configured to detect vibration intensity of predetermined rotation order of the crank angular velocity;
a first combustion controlling device configured to change a combustion parameter of the one cylinder on the basis of the cylinder pressure of the one cylinder; and
a second combustion controlling device configured to change the combustion parameter of another cylinder out of the plurality of cylinders on the basis of the vibration intensity of the predetermined rotation order, after the change in the combustion parameter of the one cylinder, wherein
the predetermined rotation order includes half-order torsional vibration of the internal combustion engine,
said second combustion controlling device has a second cylinder controlling device to change the combustion parameter of a second cylinder having a stroke shifted by 360 degrees from that of the one cylinder, so as to minimize the half-order torsional vibration of the internal combustion engine,
the plurality of cylinders include a third cylinder and a fourth cylinder having strokes shifted by different angles from that of the another cylinder, in addition to the second cylinder, and
said combustion controlling device has: (i) a third cylinder controlling device configured to change the combustion parameter of the third cylinder to minimize the half-order torsional vibration of the internal combustion engine, after the change in the combustion parameter of the second cylinder; and (ii) a fourth cylinder controlling device configured to change the combustion parameters of the third cylinder and the fourth cylinder to minimize first-order torsional vibration of the internal combustion engine, after the change in the combustion parameter of the third cylinder.

2. The control apparatus for an internal combustion engine according to claim 1, comprising:
a misfire determining device configured to determine a misfire of the internal combustion engine;
a third combustion controlling device configured to uniformly change the combustion parameters of all the plurality of cylinders to reduce the vibration intensity of the predetermined rotation order before the control by the first combustion controlling device, if it is determined that there is the misfire.

3. The control apparatus for an internal combustion engine according to claim 1, wherein the combustion parameter includes at least one of fuel injection timing, an injection amount, a pilot injection amount, and an exhaust reflux volume of the internal combustion engine.

## Patentansprüche

1. Steuerungsvorrichtung für eine Brennkraftmaschine mit einer Vielzahl von Zylindern, wobei die Steuerungsvorrichtung Folgendes aufweist:
eine Zylinderdruckerfassungseinrichtung, die gestaltet ist, um einen Zylinderdruck eines Zylinders aus der Vielzahl von Zylindern zu erfassen;
eine Kurbelwinkelgeschwindigkeitserfassungseinrichtung, die gestaltet ist, um einen Kurbelwinkelgeschwindigkeit der Brennkraftmaschine zu erfassen;
eine Vibrationsintensitätserfassungseinrichtungen, die gestaltet ist, um eine Vibrationsintensität einer vorbestimmten Rotationsordnung der Kurbelwinkelgeschwindigkeit zu erfassen;
eine erste Verbrennungssteuerungseinrichtung, die gestaltet ist, um einen Verbrennungsparameter des einen Zylinders auf der Basis des Zylinderdrucks des einen Zylinders zu ändern; und
eine zweite Verbrennungssteuerungseinrichtung, die gestaltet ist, um den Verbrennungsparameter eines anderen Zylinders aus der Vielzahl von Zylindern auf der Basis der Vibrationsintensität der vorbestimmten Rotationsordnung nach der Änderung des Verbrennungsparameters des einen Zylinders zu ändern, wobei
die vorbestimmte Rotationsordnung eine Torsionsvibration der halben Ordnung der Brennkraftmaschine enthält,
die zweite Verbrennungssteuerungseinrichtung eine zweite Zylindersteuerungseinrichtung hat, um den Verbrennungsparameter eines zweiten Zylinders zu ändern, der einen um 360 Grad von dem des einen Zylinders verschobenen Takt hat, um die Torsionsvibration der halben Ordnung der Brennkraftmaschine zu minimieren,
die Vielzahl von Zylindern einen dritten Zylinder und einen vierten Zylinder mit Takten, die durch verschiedene Winkel von dem des anderen Zylinders verschoben sind, zusätzlich zu dem zweiten Zylinder enthält, und
die Verbrennungssteuerungseinrichtungen Folgendes hat: (i) eine dritte Zylindersteuerungseinrichtung, die gestaltet ist, um den Verbrennungsparameter des dritten Zylinders zu ändern, um die Torsionsvibration der halben Ordnung der Brennkraftmaschine nach der Änderung des Verbrennungsparameters des zweiten Zylinders zu minimieren; und (ii) eine vierte Zylindersteuerungseinrichtung, die gestaltet ist, um die Verbrennungsparameter des dritten Zylinders und des vierten Zylinders zu ändern, um eine Torsionsvibration der ersten Ordnung der Brennkraftmaschine nach der Änderung des Verbrennungsparameters des dritten Zylinders zu minimieren.

2. Steuerungsvorrichtung für eine Brennkraftmaschine gemäß Anspruch 1, mit:
einer Fehlzündungsbestimmungseinrichtung, die gestaltet ist, um eine Fehlzündung der Brennkraftmaschine zu bestimmen;
einer dritten Verbrennungssteuerungseinrichtung, die gestaltet ist, um die Verbrennungsparameter von allen der Vielzahl von Zylindern einheitlich zu ändern, um die Vibrationsintensität der vorbestimmten Rotationsordnung vor der Steuerung durch die erste Verbrennungssteuerungseinrichtung zu reduzieren, falls es bestimmt ist, dass es eine Fehlzündung gibt.

3. Steuerungsvorrichtung für eine Brennkraftmaschine gemäß Anspruch 1, wobei der Verbrennungsparameter mindestens einen von einem Brennstoffeinspritzzeitpunkt, einem Einspritzbetrag, einem Voreinspritzbetrag und einem Abgasrückflussvolumen der Brennkraftmaschine enthält.

## Revendications

1. Appareil de commande pour un moteur à combustion interne ayant une pluralité de cylindres, ledit appareil de commande comprenant :
un dispositif de détection de pression de cylindre configuré pour détecter la pression de cylindre d'un cylindre parmi la pluralité de cylindres ;
un dispositif de détection de vitesse angulaire de vilebrequin configuré pour détecter la vitesse angulaire de vilebrequin du moteur à combustion interne ;
un dispositif de détection d'intensité de vibration configuré pour détecter l'intensité de vibration d'ordre de rotation prédéterminé de la vitesse angulaire de vilebrequin ;
un premier dispositif de contrôle de combustion configuré pour modifier un paramètre de combustion du un cylindre sur la base de la pression de cylindre du un cylindre ; et
un deuxième dispositif de contrôle de combustion configuré pour modifier le paramètre de combustion d'un autre cylindre parmi la pluralité de cylindres sur la base de l'intensité de vibration de l'ordre de rotation prédéterminé, après le changement du paramètre de combustion du un cylindre, dans lequel :
l'ordre de rotation prédéterminé comprend la vibration de torsion de demi-ordre du moteur à combustion interne,
ledit deuxième dispositif de contrôle de combustion a un deuxième dispositif de contrôle de cylindre pour modifier le paramètre de combustion d'un deuxième cylindre ayant une course décalée de 360 degrés par rapport à celle du un cylindre, afin de minimiser la vibration de torsion de demi-ordre du moteur à combustion interne,
la pluralité de cylindres comprennent un troisième cylindre et quatrième cylindre ayant des courses décalées par différents angles par rapport à celle d'un autre cylindre, en plus du deuxième cylindre, et
ledit dispositif de contrôle de combustion a : (i) un troisième dispositif de commande de cylindre configuré pour modifier le paramètre de combustion du troisième cylindre afin de minimiser la vibration de torsion de demi-ordre du moteur à combustion interne, après le changement du paramètre de combustion du deuxième cylindre ; et (ii) un quatrième dispositif de commande de cylindre configuré pour modifier les paramètres de combustion du troisième cylindre et du quatrième cylindre afin de minimiser la vibration de torsion de premier ordre du moteur à combustion interne, après le changement du paramètre de combustion du troisième cylindre.

2. Appareil de commande pour un moteur à combustion interne selon la revendication 1, comprenant :
un dispositif de détermination de raté d'allumage configuré pour déterminer un raté d'allumage du moteur à combustion interne ;
un troisième dispositif de contrôle de combustion configuré pour modifier uniformément les paramètres de combustion de la totalité de la pluralité de cylindres afin de réduire l'intensité de vibration de l'ordre de rotation prédéterminé après le contrôle par le premier dispositif de contrôle de combustion, si l'on détermine qu'il existe un raté d'allumage.

3. Appareil de commande pour un moteur à combustion interne selon la revendication 1, dans lequel le paramètre de combustion comprend au moins l'un parmi un calage d'injection de carburant, une quantité d'injection, une quantité d'injection pilote et un volume de reflux d'échappement du moteur à combustion interne.
